Europäisches Patentamt

**European Patent Office**

**Office européen des brevets**

(11) Veröffentlichungsnummer: **0 017 117**

**A1**

(12) **EUROPÄISCHE PATENTANMELDUNG**

(21) Anmeldenummer: 80101528.0

(22) Anmeldetag: 22.03.80

(51) Int. Cl.³: **C 08 F 14/06**
**C 08 F 2/18**

(30) Priorität: 29.03.79 DE 2912571

(43) Veröffentlichungstag der Anmeldung:
15.10.80 Patentblatt 80/21

(84) Benannte Vertragsstaaten:
AT BE CH DE FR GB IT LU NL SE

(71) Anmelder: **BASF Aktiengesellschaft**
**Carl-Bosch-Strasse 38**
**D-6700 Ludwigshafen(DE)**

(72) Erfinder: **Ahrens, Wilhelm, Dr.**
**Gaertnerweg 12**
**D-6140 Bensheim 1(DE)**

(54) **Verfahren zur Polymerisation von Vinylchlorid.**

㊹ In einem Verfahren zur Polymerisation von Vinylchlorid in Suspension, die unter Verwendung polymerer organischer Dispergierhilfsmittel durchgeführt wird, wird eine Kombination von 2 Verkrustungsinhibitoren verwendet. Eine Sorte von Verkrustungsinhibitoren basiert auf anorganischen Jodverbindungen, die in Mengen von 1 bis 1000 ppm vorhanden sein können. Die weitere Gruppe von Verkrustungsinhibitoren basiert auf wasserlöslichen anorganischen Phosphaten von Alkalien oder Erdalkalien. Diese werden in Mengen von 0,01 bis 1 Gew.%, bezogen auf die zu polymerisierenden Monomeren, angewendet. Die Anwendung eine Kombination zweier Verkrustungsinhibitoren bewirkt, daß bei der Polymerisation von VC im Reaktor und an dessen Einbauten die Bildung von Wandbelägen verhindert wird. Diese Wirkung tritt auch bei einem Suspensionsverfahren ein, bei dem vor der Durchführung der Polymerisation eine Homogenisierung vorgenommen wird (Mikrosuspensionsverfahren).

EP 0 017 117 A1

BASF Aktiengesellschaft                    O.Z. 0050/033762

Verfahren zur Polymerisation von Vinylchlorid

Die Erfindung betrifft ein Verfahren zur Polymerisation von Vinylchlorid (VC) nach dem Suspensions- bzw. Mikrosuspensionsverfahren, bei dem die Bildung von (Wand)Belägen im Polymerisationsreaktor und an dessen Einbauten durch Zugabe von wasserlöslichen anorganischen Phosphaten und Jodiden weitestgehend verhindert wird.

Bei der Suspensions- und Mikrosuspensionspolymerisation von Vinylchlorid und den damit copolymerisierbaren Monomeren bilden sich an den Wänden und an den Einbauten der Polymerisationsreaktoren Beläge aus Homo- oder Copolymerisaten des Vinylchlorids, welche den Wärmedurchgang erschweren. Außerdem können losgelöste Teile dieser Beläge mit dem hergestellten Produkt aus dem Reaktionsgefäß ausgetragen werden und somit das Polymerisat verunreinigen. Es ist deshalb erforderlich, derartige Beläge von Zeit zu Zeit aus dem Reaktionsgefäß zu entfernen bzw. vor erneuter Verwendung der Reaktoren diese Innen zu reinigen. Dies läßt sich meist durch eine aufwendige Druckwasserwäsche der Wände des Reaktors erreichen. Es sind schon sehr zahlreiche Vorschläge gemacht worden durch Zusätze geeigneter Stoffe vor oder während der Polymerisation des Vinylchlorids die Bildung von Wandbelägen zu verhindern. Beispielsweise ist es in (15) beschrieben, Phosphonsäuregruppen enthaltende polymere Verbindungen als Wandbelagverhinderer zu verwenden. Zum Stand der Technik nennen wir:

BASF Aktiengesellschaft     - 2 -     O.Z. 0050/033762

( 1) FP-PS 1 065 649
( 2) BE-PS     777 579
( 3) NL-PS 73/08 405
( 4) JA-PS 47/34 690
( 5) JA-PS 47/34 584
( 6) BE-PS     844 215
( 7) BE-PS     844 496
( 8) DE-OS 26 36 324
( 9) DE-OS 26 31 325
(10) BE-PS     844 044
(11) JA-PS 76/018332
(12) JA-PS 76/002242
(13) BE-PS     837 070
(14) DE-OS 22 32 880
(15)     P 26 34 784

Bekannt ist die Suspensionspolymerisation von olefinischen Monomeren in Gegenwart von wasserunlöslichen anorganischen Phosphaten als Dispergierhilfsmittel durchzuführen. Gelegentlich wird dabei das anorganische Phosphat aus Natrium-Phosphaten und einem Überschuß an Erdalkalimetallsalzen in situ hergestellt und in dieser Aufschlämmung die Polymerisation durchgeführt (vgl. (1) oder (2)).

Aus (3), (4) und (5) ist es bekannt, die Polymerisation von Vinylchlorid in Gegenwart von wasserlöslichen Phosphaten oder Gemischen von wasserlöslichen Phosphaten (Pyrophosphaten oder Polyphosphaten) durchzuführen, wobei die Phosphate als Puffersubstanzen, Elektrolyte oder zur Reduktion der Stippenzahl im Polymerisat dienen sollen. Es ist ferner bekannt, Phosphate zusammen mit wenigstens einer weiteren Verbindung (evtl. nach einer Vorbehandlung der Reaktorwände

öder der Einbauten) zur Vermeidung eines Belags an der Reaktorwand oder an den Einbauten anzuwenden (vgl. (6) und (7)).

Andererseits ist es bekannt Brom- und Jod-Verbindungen, allein oder zusammen mit anderen Verbindungen, z.B. zusammen mit polaren organischen Verbindungen oder Reduktionsmitteln zur Vermeidung eines Wandbelags bei der Polymerisation von VC anzuwenden (vgl. (8) und (9); bezüglich der Mitverwendung von Reduktionsmitteln (10), (11) und (12)). In (13) wird vorgeschlagen, mindestens ein Additiv aus der Gruppe a) Jodid, b) Dithiophosphorsäure oder c) Dithiocarbonsäure und den Salzen aus b) oder c) anzuwenden.

Aus (14) schließlich ist es bekannt zur Herstellung von Suspensions-PVC anstelle der konventionellen organischen Suspensionsmittel ein unlösliches Phosphat mit Apatitstruktur anzuwenden und als kationisches, oberflächenaktives Mittel quartäre Ammoniumsalze, wie Dimethylstearylbenzylammoniumbromid in Mengen von 0,01 bis 0,05 Gew.%, bezogen auf das Monomere, zu verwenden. Nach den Angaben der Anmelderin soll dabei ein Polymerisat erhalten werden, das keine Teilchen mit "äußeren Membranen" aufweist. Es wird ausgeführt, daß diese von den organischen Suspensionshilfsmitteln herrührenden Membranen einen schädlichen Einfluß auf die Polymerisateigenschaften haben sollen. Die Korngrößenverteilung der nach dem aus (14) bekannten Verfahren erhaltenen Produkte entspricht jedoch nicht den Anforderungen, die an Suspensions-PVC gestellt werden. Damit sind auch schlechtere Verarbeitungseigenschaften verbunden, was insbesondere an einer erhöhten Stippenzahl im Walzfell solcher Produkte erkennbar ist.

Es bestand daher die Aufgabe, die aus (14) bekannten Nachteile zu verbessern, und ein Verfahren vorzuschlagen, bei dem ein Produkt mit gleichmäßiger Kornverteilung, das den Anforderungen an Suspensions-PVC gerecht wird und praktisch keine nennenswerten Stippenzahlen aufweist, erhalten wird und wobei gleichzeitig die bei Verwendung von organischen Dispergierhilfsmittel bekannten stärkeren Polymerisatablagerungen verhindert werden sollen. Ferner bestand die Aufgabe, bei den bekannten Verfahren die einerseits nur die Verwendung von Halogeniden, wie Bromiden oder Jodiden und andererseits nur die Verwendung von Phosphaten kannten der Bildung eines Wandbelags noch stärker entgegen zu wirken. Dieses Ziel wird durch die Kombination von Maßnahmen, nämlich gleichzeitig Jodide und wasserlösliche anorganische Phosphate bei einem Verfahren zur Herstellung von (Mikro)Suspensions-PVC anzuwenden, erreicht.

Die Erfindung betrifft daher ein Verfahren zur Suspensionspolymerisation von Vinylchlorid oder Mischungen von Vinylchlorid mit bis zu 30 Gew.%, bezogen auf die Monomerenmischung, an anderen, mit Vinylchlorid copolymerisierbaren Monomeren in Gegenwart von mindestens je einem

a) monomerlöslichen, in Radikale zerfallenden Katalysator, sowie

b) polymeren organischen Dispergierhilfsmittel und

c) Verkrustungsinhibitor auf Basis anorganischer Jodverbindungen in Mengen von 1 bis 1 000 ppm, bezogen auf Monomere(s), sowie ggf. in Gegenwart von weiteren

d) Polymerisationshilfsstoffen oder

e) Zusatzstoffen

bei Temperaturen im Bereich von 40 bis 80°C, das dadurch gekennzeichnet ist, daß man als zusätzlichen Verkrustungsinhibitor f) mindestens ein wasserlösliches anorganisches Phosphat der Alkalien oder Erdalkalien in Mengen von 0,01 bis 1 Gew.%, bezogen auf Monomere(s), anwendet.

Zur Durchführung des erfindungsgemäßen Verfahrens können Vinylchlorid oder Mischungen von Vinylchlorid mit anderen, mit Vinylchlorid copolymerisierbaren Monomeren, eingesetzt werden. Dabei können die Monomerenmischungen bis zu 30 Gew.%, vorzugsweise bis zu 15 Gew.%, bezogen auf die Monomerenmischung, der anderen Comonomeren enthalten. Beispiele für mit Vinylchlorid copolymerisierbare Monomere sind Vinylidenchlorid, Vinylester, wie Vinylacetat oder Vinylpropionat, Vinyläther, Acrylester, Acrylnitril oder Olefine wie Äthylen oder Propylen; ferner ungesättigte Dicarbonsäuren, die ggf. teilweise oder ganz verestert sind wie Maleinsäure, Fumarsäure, Itaconsäure und die Ester der Maleinsäure.

Der Polymerisationsansatz umfaßt die Monomeren Wasser und alle Zusatzstoffe a) bis e) einschließlich der zusätzlich anzuwendenden Phosphorverbindungen. Die Zubereitung des Polymerisationsansatzes erfolgt dabei in der Regel in der Weise, daß zunächst das Wasser vorgegeben wird, in das anschließend das wasserlösliche anorganische Phosphat (f) eingebracht wird. Falls die Polymerisation bei einem bestimmten pH-Wert durchgeführt werden soll, kann man durch Verwendung verdünnter Säuren oder Laugen oder durch Verwendung von Puffersubstanzen diesen einstellen. Danach schließt sich die Zugabe des polymeren organischen Dispergiermittels (b) und in der Regel, falls dies gewünscht wird, der Polymerisationshilfsstoffe (d) oder der Zusatzstoffe (e) an. Die weitere Zubereitung des Polymerisationsanzsatzes sollte dann bevorzugt wie folgt durchgeführt werden: Katalysatorzugabe, Zugabe des Monomeren und schließlich sollte der Verkrustungsinhibitor (anorganisches Jodid) zugegeben werden. Falls keine Dosiervorrichtungen vorhanden sind, um Feststoffe bzw. Lösungen unter Druck in den Polymerisationseinsatz einzugeben, kann man den Verkrustungsinhibitor (anorganisches Jodid) zusammen mit dem Starter vor Einführung der Monomeren in den wäßrigen Polymerisationsansatz zugeben. Die Polymerisationshilfsstoffe b) bzw. die Zusatzstoffe e) werden bevorzugt vor der Zugabe des(r) Monomeren in den Polymerisationsansatz eingebracht.

Das erfindungsgemäße Verfahren wird bevorzugt bei der Durchführung der Polymerisation in Suspension angewendet. Selbstverständlich kann man unter Berücksichtigung der hierfür erforderlichen Maßnahmen das Verfahren zur Polymerisation von Vinylchlorid, so durchführen, daß ein für die Plastisolzubereitung geeignetes Polymerisat erhalten wird (Mikrosuspensionsverfahren). Bei diesen Mikrosuspensionsverfahren werden in der Regel anstelle der polymeren organischen Suspensionshilfsmittel wasserlösliche Dispergierhilfsmittel zusammen mit langkettigen Alkoholen, Ketonen bzw. Estern oder Alkanen angewendet (vgl. beispielsweise DE-AS 15 95 846/47/48). Die Durchführung der Polymerisation nach vorheriger Homogenisierung des Polymerisationsansatzes erfolgt nach den in den DE-AS 10 50 062 oder DE-AS 21 25 586 beschriebenen Verfahren.

Bei dem bevorzugt durchgeführten Suspensionsverfahren kommen als Katalysatoren (a) monomerlösliche, in Radikale zerfallende Katalysatoren in Betracht. Es können dabei die üblichen, monomerlöslichen Initiatoren, wie organische Peroxide, Perester, Peroxidicarbonate, in üblichen und bekannten Mengen alleine oder Mischungen derselben mit 2 oder mehr Bestandteilen verwendet werden. Die angewendeten Mengen liegen im Bereich von 0,005 bis 0,5 Gew.%, vorzugsweise werden Mengen von 0,01 bis 0,1 Gew.%, bezogen auf die zu polymerisierenden Monomeren oder das Monomerengemisch, angewendet.

Als polymere organische Dispergierhilfsmittel (b) sind geeignet: Polyvinylalkohol, teilweise verseiftes Polyvinyl- acetat, Celluloseäther, wie Methylcellulose, Hydroxyäthyl-cellulose, Hydroxypropylcellulose oder Hydroxypropyl-methyl-cellulose, sowie Carboxy-methylcellulose. Ferner Polyvinyl-pyrrolidon oder Gelatine. Diese Dispergierhilfsmittel oder Schutzkolloide können einzeln oder im Gemisch verwendet, in Mengen von 0,01 bis 0,3, bevorzugt von 0,05 bis 0,15, werden. Bei Durchführung eines Mikrosuspensionsverfahrens können die üblicherweise verwendeten wasserlöslichen Dispergierhilfsmittel wie Alkylsulfonate, Alkylarylsulfonate, Alkylsulfate, Seifen oder Salze der Dialkylsulfobernsteinsäure in Mengen von 0,3 bis 3,0 Gew.%, bezogen auf Monomere(s) angewendet werden. Es können auch Mischungen von zwei oder mehreren der genannten Dispergierhilfsmittel eingesetzt werden.

Als Verkrustungsinhibitoren c) eignen sich anorganische Jodverbindungen in Mengen von 1 bis 1000 ppm. In der Regel werden die leicht in Wasser löslichen Jodide der Alkalien bzw. der Erdalkalien verwendet. Bevorzugt wird Natriumjodid, da dies am wirtschaftlichsten ist. Bei der Anwendung des Verkrustungsinhibitors c) ist zu beachten, daß dieser bereits bei alleiniger Anwendung, wie sie aus (8) bekannt ist, in Mengen ab 100 ppm zu einer Verlängerung der Polymerisationszeit führen kann. Bei Anwendung zu großer Mengen an Jodid ist eine Farbverschlechterung des Produkts zu befürchten. Bevorzugt wird der Verkrustungsinhibitor c) beim erfindungsgemäßen Verfahren in Mengen von 5 bis 100 ppm, insbesondere in Mengen von 10 bis 90 ppm angewendet. Auch die Verwendung von Mengen unterhalb von 10 ppm ist nicht kritisch, solange noch der zusätzliche Inhibitor Phosphat (f) in ausreichenden Mengen zugegen ist. Es ist jedoch ein Optimum, in Bezug auf die Wirksamkeit von c) und f) bei Mengen von unterhalb 60 ppm anorganischem Jodid, bezogen auf Monomeres festzustellen, wenn man kurze Polymerisationszeiten und eine praktisch vollständige Wandbelagsverhinderung anstrebt.

Als Polymerisationshilfsstoffe (d) kommen ggf. die üblichen Molekulargewichtsregeler, wie aliphatische Aldehyde, Chlorkohlenwasserstoffe, Chloroform und die Mercaptane in üblichen Mengen in Frage.

Als Zusatzstoffe (e) können die üblichen Gleitmittel und Stabilisatoren in den dem Fachmann bekannten Mengen angewendet werden.

Das erfindungsgemäße Verfahren kann in einem Temperaturbereich zwischen 40 und $80^{\circ}$C durchgeführt werden. Insbesondere wird im Bereich zwischen 45 und $60^{\circ}$C polymerisiert. Je nach dem anzuwendenden Verfahren (Suspension- bzw. Mikrosuspension) und unter Berücksichtigung der verschiedenen Hilfsmittel wird die Temperatur in dem vorstehend genannten Bereich nach den dem Fachmann bekannten Kriterien festgelegt bzw. ausgewählt, wobei insbesondere auch die an das Produkt gestellten Kriterien bei der Auswahl der Temperatur mit berücksichtigt werden müssen.

Das Verhältnis von Monomermenge zu Wasser in dem Polymerisationsansatz liegt üblicherweise im Bereich von 0,4 : 1 bis 2 : 1, vorzugsweise wird ein Bereich von 0,6 : 1 bis 1,5 : 1 angewendet. Die vorstehend bezeichneten Bereiche gelten auch für die Anwendung von mit VC copolymerisierbaren Monomeren. Die Polymerisation kann sowohl in Stahlreaktoren ($V_2$A bzw. $V_4$A) als auch in emaillierten Gefäßen ausgeführt werden.

Bezüglich des anzuwendenden Druckes ist festzustellen, daß sich dieser aus der Addition der Partialdrücke des Wassers und der Monomeren und evtl. vorhandener Inerter ergibt. In der Regel wird das erfindungsgemäße Verfahren daher bei Drucken oberhalb von 1 bar durchgeführt, wobei der Anfangsdruck in der Regel höher ist als der Enddruck, d.h. als der Druck, bei dem die Polymerisation von einem Umsatz bis zu 80 bzw. 90 % geführt worden ist. Das erfindungsgemäße Verfahren kann sowohl kontinuierlich als auch diskontinuierlich durchgeführt werden. Für die Abfuhr der Reaktionswärme kann der Fachmann die bekannten Regeleinrichtungen benutzen (vgl. DE-AS 21 17 364 und die dort angegebene Literatur).

Wesentlich bei der Durchführung des erfindungsgemäßen Verfahrens ist, daß ein zusätzlicher Verkrustungsinhibitor ein wasserlösliches anorganisches Phosphat f) in Mengen von 0,01 bis 1 Gew.%, bezogen auf Monomere(s) angewendet wird. Als zusätzlicher Verkrustungsinhibitor (f) kommen insbesondere Erdalkali- und Alkaliphosphate, die wasserlöslich sein sollen, in Betracht. Diese werden besonders bevorzugt in Mengen von 0,05 bis 0,4 Gew.%, bezogen auf Monomere(s) angewendet. Der genannte untere Bereich ist in Bezug auf das Verfahren insofern nicht als kritisch zu betrachten, da die Wirksamkeit allmählich nachläßt. Der obere Grenzwert ist gegeben durch die Gefahr der Produktverschlechterung, da das Phosphat in das Produkt eingebaut wird. Besonders bevorzugt werden von den Phosphaten die primären und sekundären Alkaliphosphate, insbesondere des Natriums und des Kaliums; von den Erdalkalien kommen die Calcium- und Magnesiumphosphate in Betracht. Es können jedoch auch die Pyrophosphate der Alkalien bzw. Erdalkalien und die Polyphosphate derselben, z.B. Hexamethaphosphate und Triphosphate, mit gutem Erfolg angewendet werden.

Ein Vorteil des erfindungsgemäßen Verfahrens ist es, daß die Wandbelagsbildung bei Anwendung der Kombination von Verkrustungsinhibitoren auf Basis Jodid (c) und (f) (anorganisches Phosphat) in Bezug auf die Wandbelagsbildung einen vorteilhaften Effekt ergibt, der bei Anwendung der einzelnen Komponenten nicht erzielt werden kann. Darüber hinaus ist es möglich, bei Einhaltung relativ kurzer Polymerisa-

tionszeiten durch die gleichzeitige Anwendung der Kombination an Verkrustungsinhibitoren die Restgehalte an Inhibitoren im Endprodukt auf ein Maß abzusenken, so daß keine nachteilige Produktverschlechterung festgestellt werden kann.

Es wird durch das erfindungsgemäße Verfahren ermöglicht in einem bestimmten Poylmerisationsansatz die Reaktion praktisch beliebig oft hintereinander durchzuführen, ohne daß der Reaktor gereinigt werden muß. Die Beurteilung der Wandbelagsbildung in den nachfolgenden Beispielen, die die Erfindung erläutern sollen, und in den Vergleichsversuchen erfolgt nach dem folgenden Prinzip: Der Wandbelag, der sich nach zweimaliger Durchführung der Polymerisate gemäß der Lehre von (8) ergab (vgl. Versuch Nr. 7 der Tabelle 1), wird mit der Zahl 100 bewertet. In den Beispielen und in den weiteren Vergleichsversuchen ist stets ein auf diesen Wert 100 bezogener relativer Zahlenwert angegeben. Es wurde stellvertretend für das erfindungsgemäße Verfahren das diskontinuierliche Suspensionspolymeristionsverfahren ausgewählt, um die erfindungsgemäße Lehre zu veranschaulichen. Alle Angaben über Prozente und Teile in den Beispielen und Vergleichsversuchen beziehen sich, falls nichts anderen ausdrücklich vermerkt ist, auf das Gewicht.

Beispiel 1

In einem Polymerisationsautoklaven mit einem Fassungsvermögen von 2 m$^3$, der mit einer polierten Innenausstattung aus V$_2$A-Stahl und einem Impeller-Rührer versehen ist, wurden 945 kg voll entsalztes Wasser eingefüllt. Zu dem Wasser wurden die in der Tabelle 1 genannten Teile an wasserlöslichen Phosphaten und zusätzlich 389 g, entsprechend 0,075 %, bezogen auf VC, eines teilverseiften Polyvinylacetats mit einem Verseifungsgrad von 75 Mol% und einer Viskosität der 4 %-igen wäßriger Lösung von 5 mPa.s (bei 20°C), sowie 139 g einer Methylcellulose mit einem Methoxylgehalt von 28 % und einer Viskosität der 2 %-igen wäßrigen Lösung von 50 mPa.s (bei 20°C) entsprechend 0,025 %, bezogen auf VC, und außerdem 333 g t-Butylperneodecanoat zusammen mit den in der Tabelle genannten Teilen an Jodid (c) gegeben. Die Jodide wurden dem Polymerisationsansatz in diesem Stadium zugegeben, da der verwendete Polymerisationsautoklav keine Dosiervorrichtung zur Eingabe von Stoffen unter Druck, aufwies.

Der Autoklav wird anschließend verschlossen und durch Aufpressen von Stickstoff auf seine Dichtheit überprüft. Nach dem Entspannen werden 555 kg Vinylchlorid in den Autoklaven gegeben und der Inhalt auf 55°C erwärmt. Dabei stieg der Druck auf 9 bar an. Nach ca. 5 Stunden war der Druck von ursprünglich 9 bar um ca. 2 bar unter den konstanten Höchstdruck gefallen. Nach dieser Zeit wurde die Polymerisation durch Abkühlen abgebrochen und der Autoklav nach Entfernung des restlichen, nicht umgesetzten, Vinylchlorids entleert.

Die Belagsbildung an den Kesselinnenflächen und an den Einbauten des Kessels wurde nach folgenden Kriterien beurteilt. Der Belag wird nach Dicke und Entfernbarkeit mit den Noten 1 bis 10 beurteilt, wobei 1 keine Belagsbildung wiedergibt und die Note 10 einen Belag üblicher Dicke darstellt, der mit einem PVC-Schaber nicht entfernbar ist. Die Dicken werden dabei mit folgenden Faktoren unterschiedlich gewichtet:

Obere Reaktorwandhälfte     = Faktor 4
Untere Reaktorwandhälfte    = Faktor 3
Boden                       = Faktor 3

Die Summe dieser drei Wichtungen ergibt maximal die Zahl 10. Wird diese Zahl 10 mit den Faktoren 1 bis 10 entsprechend der Dicke und Entfernbarkeit des Belages multipliziert, so ergeben sich Punktzahlen von 10 bis 100, wobei als beste Punktzahl die Zahl 10 erreichbar ist. Im Vergleichsversuch 7 ergab sich nach zweimaliger Benutzung des Reaktors eine Beurteilung von 100 Punkten, nach dieser Wertung. In den Beispielen und Versuchen 8 und 9 ist auf diesen Wert 100 bezogen.

Beispiele 2 bis 6

In der vorstehend beschriebenen Versuchsapparatur wurde der in Beispiel 1 beschriebene Versuch wiederholt. Die zugegebenen Mengen an Phosphaten und Jodiden sind der nachfolgenden Tabelle zu entnehmen, ebenso wie die Beurteilung der Wandbelagsbildung nach der in der Tabelle genannten Anzahl von Polymerisationsansätzen, die in dem selben Reaktor durchgeführt worden sind.

Außerdem sind in die Tabelle die Ergebnisse von drei Vergleichsversuchen mit aufgenommen worden. Versuch 7 und Versuch 8 beschreiben den Stand der Technik, wie er sich aus den Literaturstellen (8) bzw. (3) ergibt. Versuch 9 repräsentiert den einen Stand der Technik ohne Verwendung von Verkrustungsinhibitoren.

Der Vergleich der in der Tabelle wiedergegebenen Versuchsergebnisse insbesondere 7 und 8 mit den bei erfindungsgemäßer Durchführung des Verfahrens erzielten Ergebnissen zeigt, daß eine Effektivität in Bezug auf die Wandbelagsverhinderung nur gegeben ist, wenn beide Komponenten, nämlich das Jodid zusammen mit dem löslichen anorganischen Phosphat angewendet werden.

Tabelle 1

| Bsp. | Verkrustungsinhibitorsystem | | | Zahl der Poly-merisationen | Wandbelag relativ |
| | c) Natriumjodid | f) anorg. Phosphat Art | Menge (Gew.%) | | |
| --- | --- | --- | --- | --- | --- |
| 1 | 0,001 | Natriumhexametaphosphat $(NaPO_3)_6$ | 0,1 | 3 | 12 |
| 2 | 0,001 | Natriumdihydrogenphosphat $NaH_2PO_4$ | 0,1 | 4 | 11 |
| 3 | 0,002 | Calciumdihydrogenphosphat $Ca(H_2PO_4)_2$ | 0,1 | 6 | 10 |
| 4 | 0,002 | Natriumtriphosphat $Na_5P_3O_{10}$ | 0,1 | 3 | 10 |
| 5 | 0,001 | Magnesiumdihydrogenphosphat $Mg(H_2PO_4)_2$ | 0,1 | 3 | 12 |
| 6 | 0,005 | Natriumpyrophosphat $Na_2P_2O_7$ | 0,1 | 5 | 13 |
| Vgl.-vers. | | | | | |
| 7 | 0,002 | - | | 2 | 100 |
| 8 | - | Natriumtriphosphat | 0,1 | 1 | 120 |
| 9 | - | - | | 1 | 130 |

Patentanspruch

Verfahren zur Suspensionspolymerisation von Vinylchlorid oder Mischungen von Vinylchlorid mit bis zu 30 Gew.%, bezogen auf die Monomerenmischung, an anderen, mit Vinylchlorid copolymerisierbaren Monomeren in Gegenwart von mindestens je einem

a) monomerlöslichen, in Radikale zerfallenden Katalysator, sowie

b) polymeren organischen Dispergierhilfsmittel und

c) Verkrustungsinhibitor auf Basis anorganischer Jodverbindungen in Mengen von 1 bis 1000 ppm, sowie ggf. in Gegenwart von weiteren

d) Polymerisationshilfsstoffen oder

e) Zusatzstoffen

bei Temperaturen im Bereich von 40 bis 80°C, dadurch gekennzeichnet, daß man als zusätzlichen Verkrustungsinhibitor f) mindestens ein wasserlösliches anorganisches Phosphat der Alkalien oder Erdalkalien in Mengen von 0,01 bis 1 Gew.%, bezogen auf Monomere(s), anwendet.

Europäisches Patentamt

**EUROPÄISCHER RECHERCHENBERICHT**

Nummer der Anmeldung

EP 80 10 1528

## EINSCHLÄGIGE DOKUMENTE

| Kategorie | Kennzeichnung des Dokuments mit Angabe, soweit erforderlich, der maßgeblichen Teile | betrifft Anspruch |
|-----------|-------------------------------------------------------------------------------------|-------------------|
| | DE - A - 2 739 708 (SOLVAY)<br>* Anspruch 1; Seite 11, Zeilen 13,22,23; Beispiel 5 *<br><br>-- | |
| D | FR - A - 2 123 578 (AQUITAINE)<br>* Ansprüche 1,2,4,5 *<br>& BE - A - 777 579<br><br>-- | |
| DA | FR - A - 2 318 883 (SHIN-ETSU)<br><br>----- | |

**KLASSIFIKATION DER ANMELDUNG (Int.Cl. 3)**

C 08 F 14/06
2/18

**RECHERCHIERTE SACHGEBIETE (Int. Cl. 3)**

C 08 F 14/06
2/20
2/18
14/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---------------|------------------------------|--------|
| Den Haag | 18-06-1980 | BOLETTI |

EPA form 1503.1  06.78